# EUROPEAN PATENT APPLICATION

(11) **EP 2 339 564 A1**
(43) Date of publication of application: **29.06.2011**
(21) Application number: 10193668.0
(22) Date of filing: 03.12.2010
(51) Int. Cl.: G09B 7/073, G09B 5/06

(54) **System, apparatus, method for playing multimedia**

(30) Priority: 04.12.2009 KR 20090119990
(71) Applicant: Jang, Jin Hyuk, Seoul 140-050 (KR)
(72) Inventor: Jang, Jin Hyuk, Seoul 140-050 (KR)
(74) Representative: Collin, Jérôme

(57) **Abstract**

There is provided a system for playing multimedia that includes: a printed matter printed with special ink; a plurality of pattern recognition units including a sensor recognizing a material of the printed special ink and outputting a corresponding electrical signal, which transmits an identity code depending on the electrical signal corresponding to the recognized material and an identification number stored to identify at least one pattern recognition unit of the plurality of pattern recognition units; a selection unit receiving the identity code and the identification number and when the identification number corresponds to a selection signal indicating a pattern recognition unit selected by a user among the plurality of pattern recognition units, the identity code and the identification number to the outside; and a content playing unit generating and transmitting the selection signal to the selection unit and receiving the identity code and identification number transmitted by the selection unit and extracting and displaying multimedia contents corresponding to the identity code and identification number.

## Description

### BACKGROUND OF THE INVENTION

### 1. Field of the Invention

The present invention relates to a system, an apparatus, and a method for playing multimedia, and more particularly, to a system, an apparatus, and a method for playing multimedia which recognize special ink printed in a printed matter and play multimedia contents based on recognized information.

### 2. Description of the Related Art

In the related art, when a bar code is printed in a printed matter as a recognition code and the printed bar code is read through a scanning apparatus, an education system that outputs voice information corresponding to the bar code, that is, type information through a voice output system is provided.

For this, a voice chip comprehensively storing type information of the printed matter is mounted in the voice output system. That is, the education system is developed to further improve a learning ability (particularly, a linguistics related printed matter) of a user by allowing the user to directly read information of a printed matter required for learning with user's eyes and allowing the user to listen the information through the voice output system.

However, the education system in the related art is merely limited to a voice output function to output the information printed in the printed matter as an acoustic element and cannot provide the implementation of various multimedia of the print information. As a result, in the related art, the education system cannot help being limited to a framework of a text-centered cramming education.

For example, assumed that pictures and characters of animal shapes are printed in the printed matter and the bar code is carved adjacent thereto, in the related art, sounds or names of animals can be outputted through voice by using the voice output system, but moving picture information of visual elements such as movements or appearances of the animals cannot be provided. Moreover, in the bar code applied to the education system in the related art, there is a structural problem that error details frequently occur by contamination or damage.

As a result, a pattern code is read, and thereafter, processed in a computer or in a web server on line to provide an audiovisual service, such that a method for maximizing learning and recognition effects of individual users is appearing.

### SUMMARY OF THE INVENTION

The present invention has been made in an effort to provide a system, an apparatus, and a method for playing multimedia which can be applied to an education system and diversified ordering systems by selecting and processing patterns, and the like recognized from a plurality of pattern recognition devices.

The technical objects achieved by the present invention are not limited to the foregoing technical problems. Other technical objects, which are not described, can clearly be understood by those skilled in the art from the following description of the present invention.

An exemplary embodiment of the present invention provides a system for playing multimedia that includes: a printed matter printed with special ink; a plurality of pattern recognition units including a sensor recognizing a material of the printed special ink and outputting a corresponding electrical signal, which transmits an identity code depending on the electrical signal corresponding to the recognized material and an identification number stored to identify at least one pattern recognition unit of the plurality of pattern recognition units; a selection unit receiving the identity code and the identification number and when the identification number corresponds to a selection signal indicating a pattern recognition unit selected by a user among the plurality of pattern recognition units, transmitting the identity code and the identification number to the outside; and a content playing unit generating and transmitting the selection signal to the selection unit and receiving the identity code and identification number transmitted by the selection unit and extracting and displaying multimedia contents corresponding to the identity code and identification number.

The pattern recognition unit may include a wireless communication unit, and the identity code and the identification number may be transmitted to the selection unit through the wireless communication unit.

The selection unit and the content playing unit may integrally be formed.

The selection unit may be embedded in a universal serial bus (USB) module mounted on the content playing unit.

The identity code may be acquired by converting the electrical signal corresponding to the material of the printed special ink into a data form.

The selection unit may be an access point (AP).

Meanwhile, another exemplary embodiment of the present invention provides a method for playing multimedia that includes: generating an identity code corresponding to an outputted electrical signal by sensing a material of special ink printed in a printed matter in a pattern recognition unit; transmitting the identity code to a selection unit together with a previously stored identification number in order to identify any one of a plurality of pattern recognition units; transmitting an identification number and an identity code corresponding to a selection signal transmitted from a content playing unit to the content playing unit by receiving the identity code and the identification number in the selection unit; and extracting and displaying previously stored multimedia contents corresponding to the identity code transmitted from the selection unit in the content playing unit.

Meanwhile, yet another exemplary embodiment of the present invention provides a system for playing multimedia that includes: a printed matter printed with special ink; at least one pattern recognition unit including a sensor recognizing a material of the printed special ink and outputting a corresponding electrical signal, which transmits an identity code depending on the electrical signal corresponding to the recognized material to a selection unit; and a content playing unit receiving the transmitted identity code from the selection unit and extracting displaying multimedia contents corresponding thereto.

As described above, according to exemplary embodiments of the present invention, a system, an apparatus, and a method for playing multimedia allow a user to select and process a desired pattern recognition device in a plurality of pattern recognition devices through identification numbers granted to the pattern recognition devices and a unique code of special ink printed in a printed matter to manage the plurality of pattern recognition devices by using a small number of servers and playing apparatuses.

### BRIEF DESCRIPTION OF THE DRAWINGS

FIG. 1 is a block diagram showing a system for playing multimedia according to an exemplary embodiment of the present invention;
FIG. 2 is a block diagram showing a pattern recognition device according to an exemplary embodiment of the present invention;
FIG. 3 is a block diagram showing an external apparatus selecting device according to an exemplary embodiment of the present invention;
FIG. 4 is a schematic diagram showing an appearance of the external apparatus selecting device according to the exemplary embodiment of the present invention;
FIG. 5 is a block diagram showing a communication unit of the external apparatus selecting device according to the exemplary embodiment of the present invention;
FIG. 6 is a block diagram showing an apparatus for playing multimedia according to an exemplary embodiment of the present invention.
FIG. 7 is a schematic diagram showing a display unit of the apparatus for playing multimedia according to the exemplary embodiment of the present invention;
FIG. 8 is a block diagram showing a multimedia playing server according to an exemplary embodiment of the present invention;
FIG. 9 is a block diagram showing a terminal according to an exemplary embodiment of the present invention;
FIG. 10 is a flowchart showing a method for playing multimedia according to an exemplary embodiment of the present invention; and
FIG. 11 is a block diagram specifically showing the system for playing multimedia according to the exemplary embodiment of the present invention.

### DETAILED DESCRIPTION OF THE PREFERRED EMBODIMENTS

Hereinafter, a system, an apparatus, and a method for playing multimedia according to exemplary embodiment of the present invention will be described in more detail with reference to the accompanying drawings.

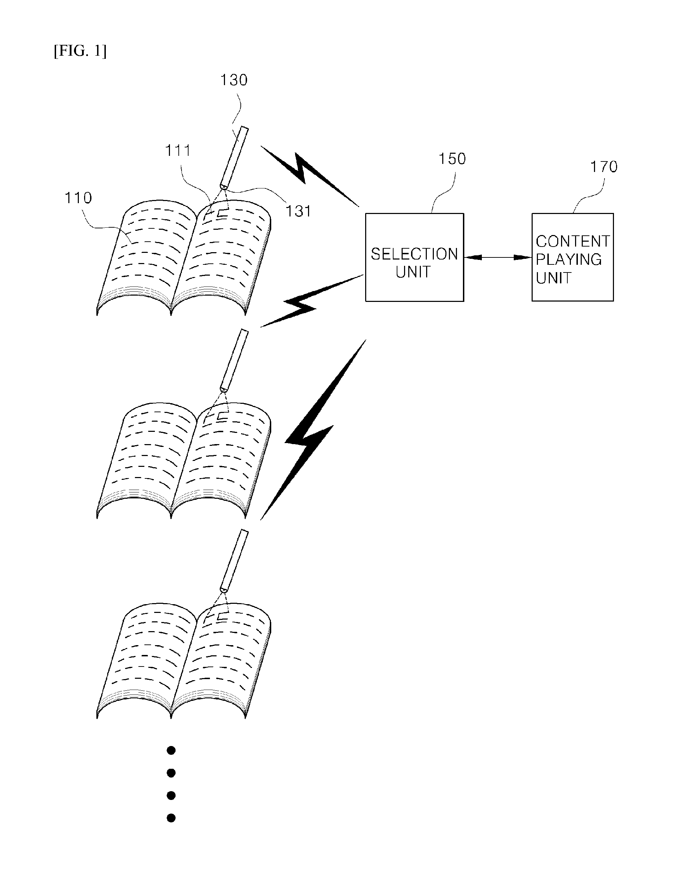

FIG. 1 is a block diagram showing a system for playing multimedia according to an exemplary embodiment of the present invention.

The multimedia playing system shown in FIG. 1 includes: a printed matter 110 printed with special ink 111, a plurality of pattern recognition units 130 including a sensor 131 recognizing an identity code of the printed special ink and transmitting the recognized identity code together with a previously stored identification number, a selection unit 150 receiving the identity code and the identification number and when the identification number corresponds to a selection signal, transmitting the identity code and the identification number to the outside, and a content playing unit 170 generating and transmitting the selection signal to the selection unit and extracting and displaying previously stored multimedia contents corresponding to the identity code and the identification number transmitted from the selection unit.

Only the characters could be processed by initial computers, but with the development of information recognition (input) and expression (output) techniques, diversified media constituted by sounds, figures, images, and the like can be processed. They are called multimedia.

The multimedia are very variously applied throughout on every aspect of the society such as a multimedia conference, electronic publishing, virtual reality, diversified entertainment, medical, educational broadcasts, and the like. In recent years, apparatuses that recognize codes of books, and the like and play them as multimedia contents as a part of the electronic publishing or the educations has appeared.

Figures, characters, and the like for representing predetermined contents to readers are printed in the printed matter 110 like books, order pads, pamphlets, catalogues, and the like. In the exemplary embodiment, the figures, the character, and the like are printed in the printed matter with the special ink. The special ink is made of a material which is sensible by a predetermined sensor and may be disposed among figures and characters which are recognizable by users as codes which are unrecognizable by the users in relation with cost, and the like. For example, the special ink can be made up of transparent fluidic fluorescent material which react to an ultraviolet light. Such fluidic fluorescent material is produced by combination of platinum cyanide, zinc sulfide, cadmium sulfide, cadmium silicate and cadmium borate etc. According to the relative ratio of the combined materials, the fluorescent materials varies in their absorbing frequency ranges of light. Also the sensor is comprised of ultraviolet light emitter and light detector. The fluidic fluorescent material absorbs the specific frequency range of ultraviolet light radiated from the emitter and reflects light beyond the range. The light detector of the sensor detects the frequencies of the reflected light thus the sensor can sense the kind of the special ink. Furthermore, combining the several fluorescent materials which varies in absorbing frequency ranges to make print pattern, as like as a bar code, various identity code can be produced and the sensor distinguishes them.

The pattern recognition unit 130 includes a sensor that senses the special ink printed in the printed matter to recognize an identity code of the special ink. The sensor outputs different electrical signals depending on a material of the sensed special ink or a print pattern. The electrical signal is converted into a data format to form the identity code. For this, the sensor may include a data converter that converts the electrical signal into the data format. For reference, the material of the special ink includes materials showing different colors, materials having different reflectances, and the like and the print pattern may include the characters recognizable by the users and unique patterns established after the discussion between a recognition unit producer and a printed matter producer.

An identification number is granted to the pattern recognition unit of the exemplary embodiment. The identification number may be an identity number of the unit at the time of producing products or a designation number designed after the discussion between a content playing unit producer and a producer of a program driven in the content playing unit. Alternately, the identification number is notified to the content playing unit at the time of driving the pattern recognition unit to allow the content playing unit to recognize the identification number. Consequently, the identification number represents the number (character codes are valid in addition to the number) that allow the content playing unit to discriminate a plurality of pattern recognition units when the plurality of pattern recognition units exist.

The pattern recognition unit previously stores the identification number in a ROM, and extracts the identification number and transmits it to the selection unit together with the identity code when the identity code of the printed matter recognized by the sensor by user's intention exists. Moreover, the transmission may be performed by wired and wireless communication schemes, but when the plurality of pattern recognition units are provided, the wireless communication scheme is preferable in order to settle complexity of diversified wirings and use convenience. In order to perform a wireless communication, the identification code and the identity code are synthesized with each other and thereafter, converted into wireless communication data.

In order to use the wireless communication scheme, the pattern recognition unit may include a wireless communication section that is provided with a wireless communication module (chip) which can perform a short-range wireless communication such as Bluetooth, Zigbee, an infrared communication scheme, an antenna, and the like. The identity code and the identification number are transmitted to the selection unit through the wireless communication section. However, in the case of the wireless communication scheme, a power supply unit that supplies power to the sensor, the wireless communication section, and the like should further be included. In this case, the power supply unit may be a chargeable type.

The selection unit 150 receives identity codes and identification numbers from the plurality of pattern recognition units and when the selection signal corresponds to the identification number, transmits the identity codes and the identification numbers to the content playing unit. The selection signal is an element received from the content playing unit. The selection signal may select all pattern recognition units under the control of the selection unit or only some of the pattern recognition units.

The selection unit should include a communication module that can exchange data with the pattern recognition unit. Therefore, in the case in which the pattern recognition unit is wireless, the selection unit should include a selection wireless communication section that can exchange data with the wireless communication section of the pattern recognition unit. Further, the selection unit should include an element that analyzes the data transmitted from the pattern recognition unit and extracts the identification number and an element that compares the extracted identification number with the selection signal transmitted from the content playing unit. In the case in which the identification number corresponds to the selection signal, the corresponding selection signal and the identity code transmitted together with the corresponding selection signal are transmitted to the content playing unit.

The selection unit may externally be embedded in a universal serial bus (USB) module that is mounted on the content playing unit and functionally be an access point (AP) using the plurality of pattern recognition units as a final terminal.

The content playing unit generates the above-mentioned selection signal and transmits it to the selection unit. The selection signal is generated by a request from the user. That is, when the user selects a desired pattern recognition unit, the content playing unit generates a selection signal for selecting an identification number and an identity code transmitted from the pattern recognition unit selected by the user. Further, the content playing unit extracts multimedia contents corresponding to the identification number and the identity code that are selected and transmitted by the selection signal in the selection unit and displays it to the user. For this, the content playing unit should include at least multimedia contents corresponding to the identity code. The multimedia content may be provided by being stored in an additional storage space. Contrary to this, the multimedia contents may be provided by being transmitted from the outside through communication means such as Internet, or the like.

Further, the content playing unit should include visual/acoustic output means such as a display, a speaker, and the like in order to display the multimedia content to the user and further include a playing module for playing the multimedia contents. Further, the content playing unit should further include a communication module for wired/wireless communication with the selection unit, particularly, should include an element that separates and extracts the identification number and the identity code by analyzing data transmitted as wireless communication data in the case of the wireless communication. The content playing unit displays the identification number while displaying the multimedia content in accordance with the identity code to notify to the user a pattern recognition unit related to the displayed multimedia contents. When the identification number is displayed as a unique number or code, it may be difficult for the user to recognize it. Therefore, the identification number may be converted into a content which is recognizable by the user to be outputted. For example, in the case in which the identification number is '113AC33', '113AC33' is not outputted. Instead, a content of 'third pattern recognition unit' may be outputted. In this case, the recognizable content may be changeable by the user. Therefore, in the case in which the user enters 'Student No. 3 Hong Gil Dong' modified from 'Pattern Recognition Unit No. 3' in '113AC33', 'Student No. 3 Hong Gil Dong' may be outputted.

Meanwhile, the selection unit and the content playing unit that are described above may integrally be formed.

As described above, the multimedia playing system according to the exemplary embodiment of the present invention may be implement as a system that includes content playing units less than the pattern recognition units by selecting an identity code transmitted from a predetermined pattern recognition unit by using identification numbers to the pattern recognition units and playing multimedia contents suitable therefor.

Herein, the components of the multimedia playing system will be described in more detail.

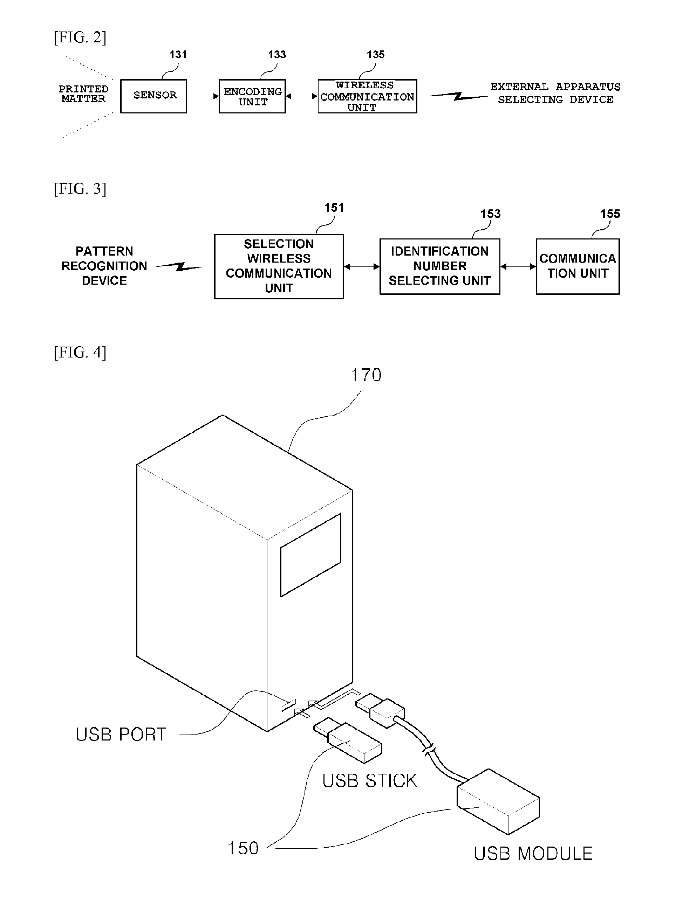

FIG. 2 is a block diagram showing a pattern recognition device according to an exemplary embodiment of the present invention and the pattern recognition device may correspond to the pattern recognition unit of FIG. 1.

The pattern recognition device shown in FIG. 2 includes a sensor 131 sensing at least of materials or patterns of special ink printed in the printed matter, an encoding unit 133 converting the sensed material or pattern into a data format as an identity code by using identity code information stored in a storage unit, and a wireless communication unit 135 extracting an identification number stored in the storage unit and wirelessly transmitting the extracted identification number together with the identity code.

The sensor 131 senses the material or pattern of the special ink printed in the printed matter. An optical sensor corresponds to the sensor 131 and senses light reflectance or a printed pattern depending on the material of the special ink to output the electrical signal. The light transmittance and the color may vary depending on the material of the ink. The sensor senses a light receiving amount and a color depending on the light reflectance to output the electrical signals corresponding thereto. Further, predetermined patterns such as ' ', 's', and the like are sensed to output the electrical signals corresponding thereto. Of course, the electrical signals may be generate and outputted by using the material and pattern of the ink.

The encoding unit 133 converts the electrical signal which is an output signal of the sensor into the identity code. The encoding unit 133 corresponds to the data converter mentioned while describing the sensor in FIG. 1. Since the identity code means data which is processible in a computer device, and the like, the electrical signal should be converted into the identity code by using appropriate identity code information in order to covert the electrical signal into the identity code. For example, in the case in which 0.1V and 0.3V are outputted for a predetermined time, when 0.1 V, 0.3V → '01001000" is included in the identity code information. In this case, '01001000' is outputted and the data becomes the identity code. Of course, since such an example is merely one example for describing an operation of the encoding unit, the data is convertible by various schemes.

However, since the scheme or the identity code information may be changed depending on a business policy of a printed matter producer or the pattern recognition device producer, the pattern recognition device may have a structure to recognize the identity code information as necessary. The pattern recognition device may include a storage unit for storing the identity code information and may include a communication unit that receives identity code information to be updated from the outside at the time of changing the identity code information. The communication unit may be formed integrally with the wireless communication unit.

The wireless communication unit 135 extracts the identity code generated by the encoding unit and a unique identification number of the pattern recognition device stored in the storage unit and transmits both of them to the outside.

The identification number is a code used to distinguish the pattern recognition device from other pattern recognition devices. At the time of transmitting the identity code and the identification number to the outside, the identity code and the identification number may be transmitted separately or together. In the case in which the identity code and the identification number are separately transmitted, it may be processed as if the identity code is transmitted together with the identification number by embedding a flag related with the identification number into a header of the identity code. At the time of transmitting both the identity code and the identification number together with each other, they are modulated to be suitable for the wireless communication and thereafter, may consecutively be transmitted and after the identity code and the identification number are synthesized with each other, it may be converted into a wireless communication signal to be transmitted. The transmission scheme described above will previously be engaged to process the transmitted identity code and identification number to an external apparatus, that is, an external apparatus selecting device. Further, in the case in which the pattern recognition device itself is small sized, since a mounting space of the wireless communication module (chip) and the antenna constituting the wireless communication unit may be limited, the short-range communication scheme such as Bluetooth or Zigbee may be adopted.

The wireless communication unit transmits the identity code and the identification number in the wireless communication scheme. Further, the identity code information is transmitted from the outside and stored in the storage unit as necessary. Therefore, the communication scheme of the wireless communication unit should be a communication scheme which can exchange data with the external apparatus (at least external apparatus selecting device). When it is described on another aspect, a wireless communication unit corresponding to the wireless communication unit should be provided outside.

Meanwhile, since the user grips the pattern recognition device including the above components with his/her hands, it is preferable that the pattern recognition device has an appearance which is easily used. For example, the pattern recognition device includes a pen-type housing and the sensor, the encoding unit, and the wireless communication unit may be mounted on the pen-type housing.

Further, the pattern recognition device that wirelessly exchanges data with the external apparatus through the wireless communication unit itself should provide electrical power required to drive the sensor, the encoding unit, the wireless communication unit, and the like. Therefore, the pattern recognition device may include a power supply unit and the power supply unit may be a chargeable type for user's convenience. Of course, a battery, and the like may be used as the power supply unit.

As described above, the pattern recognition device according to the exemplary embodiment of the present invention senses the material or pattern of the special ink printed in the printed matter to generate the identity code and transmits the identity code to the outside together with the identification number of the apparatus to distinguish the pattern recognition devices from each other by using the identification numbers when the plurality of pattern recognition devices are provided.

Further, the wireless communication unit transmits only the identification number to the outside to allow the external apparatus selecting device and the multimedia playing device to retrieve or register the transmitted identification number at the time of driving the pattern recognition device. As a result, when the pattern recognition device is broken or lost, it is possible to easily use a new pattern recognition device.

FIG. 3 is a block diagram showing an external apparatus selecting device according to an exemplary embodiment of the present invention.

The external apparatus selecting device shown in FIG. 3 may correspond to the selection unit of FIG. 1 and includes a selection wireless communication unit 151 receiving the identity code of the special ink printed in the printed matter and the identification number of the external apparatus from a plurality of external apparatuses, an identification number selecting unit 153 selecting an identification number matching the selection signal stored in a selection storage unit among the identification numbers, and a communication unit 155 transmitting the selected identification number and the identity code transmitted together with the selected identification number to the outside.

The selection wireless communication unit 151 receives the identity code of the special ink printed in the printed matter and the identification number of the external apparatus from the plurality of external apparatuses. Since the identity code and the identification number transmitted from the external apparatus may be modulated into the wireless communication signal, appropriate demodulation may be performed. Further, in the case in which the identity code and the identification number are separately transmitted or synthesized, the identity code and the identification number are separately extracted and is written in a table, the identity code and the identification number transmitted from the same external apparatus is preferably processed as one group.

The selection wireless communication unit should support a communication scheme supported by the external apparatus for communication with the external apparatus. If the plurality of external apparatuses wants different communication schemes, the selection wireless communication unit may be configured to support one or more communication scheme.

Further, the selection wireless communication unit may transmit the identity code information required to generate the identity code. In this case, the identity code information may be transmitted from the multimedia playing apparatus (content playing unit of FIG. 1).

The identification number selection unit 153 verifies whether or not an identification number matching the selection signal stored in the selection storage unit is provided among the identification numbers transmitted from the external apparatus. In the case in which the identification numbers matching the previously stored selection signals, respectively are provided, the matched identification number and the identity code forming the same group as the identification number are selected to transmitted to the communication unit. The selection signal enables selecting one or more pattern recognition device among the plurality of pattern recognition devices in accordance with the request from the user as described above. Therefore, the selection signal includes the identification number to distinguish and designate the pattern recognition device. Since the external apparatus selecting device does not directly receive the user's request, the selection signal is transmitted from the multimedia playing apparatus. The selection signal is transmitted in real time to match the identification number transmitted from the external apparatus in real time, but since it may apply a large load to the identification number selecting unit and the communication unit that receives the selection signal, the selection signal may be stored in an additional selection storage unit (not shown) to be used.

If the selection wireless communication unit receives a wireless communication signal formed by synthesizing the identity code and the identification number with each other from the external apparatus, the identification number selecting unit extracts the identity code and the identification number from the wireless communication signal and thereafter, may select the identification number matching the selection signal from the extracted identification numbers. That is, the wireless communication signal may be analyzed by not the selection wireless communication unit but the identification number selecting unit.

The communication unit 155 transmits the identification number selected by the identification number selecting unit and the identity code (identity code included in the same group as the identification number) transmitted together with the selected identification number to the outside. The external apparatus may be a multimedia playing apparatus that can play multimedia contents related with the identity code.

The communication unit may communicate with the external apparatus by the wireless or wired scheme. Since only one external apparatus selecting device may be positioned at a predetermined-sized location and is not a device which the user grips and uses with his/her hands, it may communicate by the wired communication scheme and is not limited in its size. Therefore, the external apparatus selecting device may include a component that performs a long-range wireless communication in some cases.

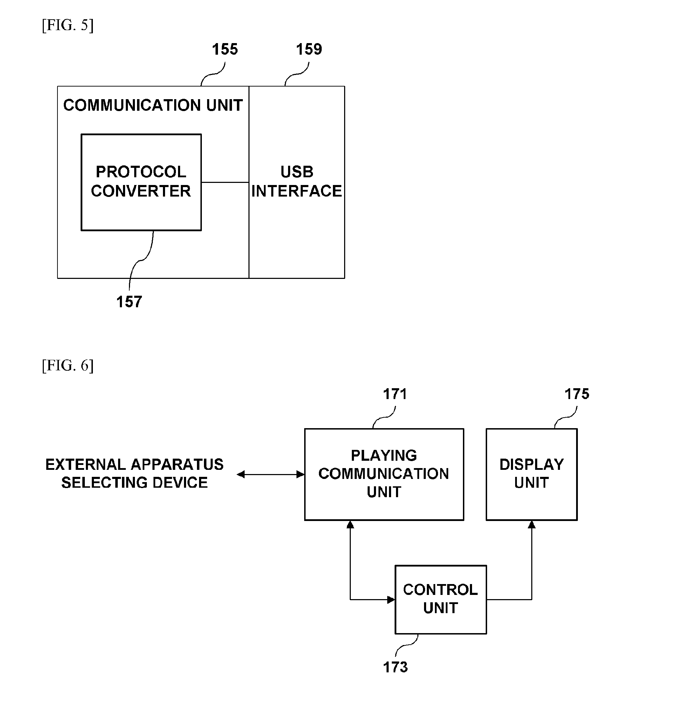

As one example of the wired scheme, the communication unit may use a universal serial bus (USB). The external apparatus selecting device 150 may have a form such as a USB stick connected to a USB port of the multimedia playing apparatus 170 or a form such as a module connected through a wiring as shown in FIG. 4. Further, as shown in FIG. 5, the communication unit may internally include a protocol converter 157 converting the selected identification number and the identity code transmitted together with the selected identification number into a universal serial bus (USB) serial protocol and a USB interface 159 where the converted USB serial protocol is communicated.

Meanwhile, in the case in which the communication unit uses the wireless communication scheme, the communication unit may be formed integrally with the selection wireless communication unit.

As described above, the external apparatus selecting device according to the exemplary embodiment may receive the identity codes and the identification numbers from the plurality of external apparatuses, i.e., the pattern recognition device and match the identification numbers with the selection signals transmitted from the external apparatus such as the multimedia playing device to select only the matched identification number and identity code and transmit them to the external apparatus. As a result, the multimedia playing apparatus reduces a load because it may omit or reduce a process of finding a desired identification number. Further, the multimedia playing system may be implemented by changing only software of the existing multimedia playing apparatus by adding the external apparatus selecting device.

FIG. 6 is a block diagram showing an apparatus for playing multimedia according to an exemplary embodiment of the present invention.

The multimedia playing apparatus shown in FIG. 6 may correspond to the content playing unit of FIG. 1 and includes a playing communication unit 171 transmitting a selection signal to an external apparatus and receiving an identification number selected by the selection signal and an identity code corresponding to the identification number from the external apparatus, a control unit 173 generating and transmitting the selection signal to the playing communication unit in accordance with a user's request, allocating a display region depending on the user's request to the identification number, and extracting multimedia contents corresponding to the identity code and playing it, and a display unit 175 displaying the played multimedia contents in the display region.

The multimedia playing apparatus plays multimedia contents corresponding to an identity code of a printed matter recognized by a pattern recognition device and displays them to a user.

For this, the playing communication unit 171 receives the identity code from the external apparatus such as an external apparatus selecting device. In the case of processing a plurality of pattern recognition devices, the playing communication unit transmits the selection signal for selecting the pattern recognition device which the user requests to the external apparatus. Data transmitted from the external apparatus after transmitting the selection signal is the identification number selected by the selection signal and the identity code of the same group corresponding to the identification number.

A communication scheme of the playing communication unit is wired or wireless and should be compatible to the external apparatus which performs a communication. If a plurality of external apparatuses are provided and use different communication schemes, the playing communication unit may support a plurality of communication schemes against it.

The control unit 173 generates the selection signal and transmits it to the playing communication unit in accordance with the user's request. For this, the multimedia playing apparatus may include an input unit (not shown) such as a keyboard, or the like, which receives the user's request. Further, the control unit allocates the identification number to a display region depending on the user's request, and extracts and plays multimedia contents corresponding to the identity code from a playing storage unit.

The selection signal includes the identification number of the pattern recognition device. That is, this means that the multimedia playing apparatus should know the identification number of the pattern recognition device. The method may be implemented by providing identification number information at the time of producing the pattern recognition device and the multimedia playing apparatus or when the multimedia playing apparatus registers the identification number by transmitting only the identification number to the multimedia playing apparatus at the time of driving the pattern recognition device. The former means that the multimedia playing apparatus stores the identification numbers of all the pattern recognition devices. Even in this case, a process of receiving and registering the identification number at the time of driving the pattern recognition device may be required to determine the pattern recognition device under the control of the multimedia playing apparatus. Further, in the former case, an identification number of a newly produced pattern recognition device may be updated through the access to Internet, or the like as necessary. In both the former and latter cases, the registered identification number should be stored in order to generate the selection signal and the storage may be performed in the playing storage unit.

The multimedia contents are stored in the playing storage unit together. The control unit extracts and plays the multimedia contents corresponding to the identity code from the playing storage unit. If the corresponding multimedia contents do not exist in the playing storage unit, the multimedia contents may be updated through Internet. Further, the control unit may include diversified decoder, an image correction module, and a sound source module.

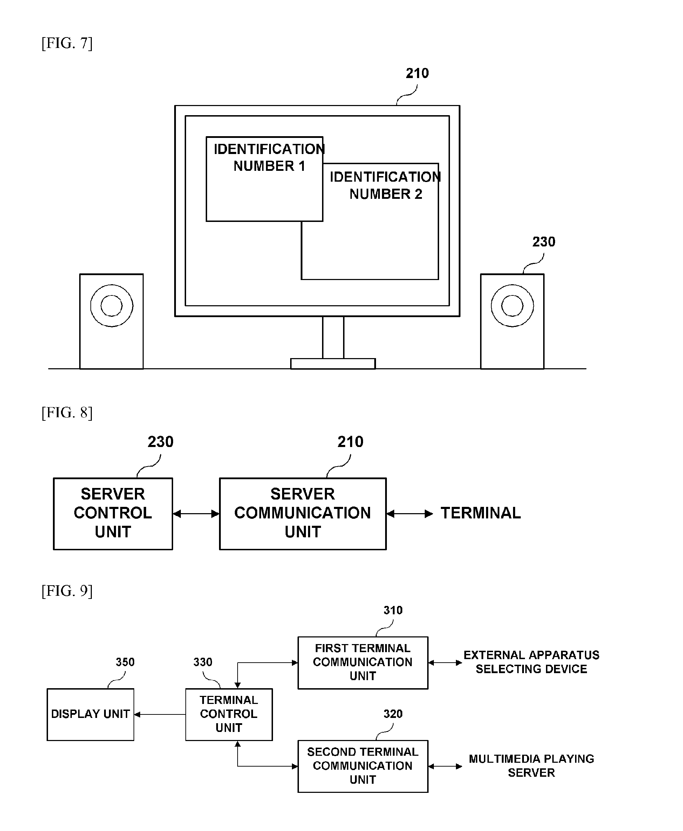

Further, the control unit may allocate a display region where the played multimedia contents will be displayed depending on the identification number. The played multimedia contents are displayed to the user through display means such as a display or a speaker. In this case, a screen region of the display and the speaker to be displayed may be selected according to the user's request. For example, in the case in which the user establishes multimedia contents display regions of pattern recognition devices having identification number 1 and identification number 2 as shown in FIG. 7, multimedia contents corresponding to an identity code transmitted together with identification number 1 are displayed in a display region allocated to identification number 1 on a display 210. If the user establishes the display region of identification number 2 to be displayed in both the display 210 and the speaker 230, multimedia contents corresponding to an identity code transmitted together with identification number 2 are displayed through a display region and a speaker allocated to identification number 2 on the display.

Further, the control unit may generate identity code information required to generate the identity code and transmit the identity code information through the playing communication unit to the external apparatus.

The display unit 175 is an element that displays the multimedia contents played in the control unit and the display 210, the speaker 230, and the like of FIG. 7 correspond to the display unit 175. Only the multimedia contents may be displayed in the display unit, but the identification number may also be displayed together with the multimedia contents by user's selection. For example, a multimedia playing apparatus where a teacher is positioned may receive and reproduce identity codes and identification numbers from pattern recognition devices distributed to students in a classroom. In this case, when the teacher wants to display multimedia contents corresponding to an identity code transmitted from a pattern recognition device of Student No. 2, 'Student No. 2 Hong Gil Dong' converted so as for the teacher to easily recognize the identification number the identification number may be displayed together with the multimedia contents.

A user of the pattern recognition device and a user of the multimedia playing apparatus described above may be the same as or different from each other.

The case in which the users are the same as each other may correspond to self learning. For example, when the user selects a bear in a printed matter where an animal picture is printed, the multimedia playing apparatus may display a description about the bear, a related animation, sound, and the like. If a plurality of users are provided, the display unit of the multimedia playing apparatus may be partitioned and used. Further, the multimedia contents may sequentially be displayed.

A case in which the users are different from each may correspond to an environment such as the classroom or a restaurant. In the case of the classroom, in general, the student becomes the user of the pattern recognition device and the teacher becomes the user of the multimedia playing apparatus. The students solve problems and check answers through the pattern recognition devices and the result may be displayed to allow the teacher to recognize the result.

Further, in the case of the restaurant, when an order pad printed by the pattern recognition device and the special ink is provided in each table and a customer selects a predetermined menu printed on the order pad by using the pattern recognition device, it may be verified on a desk through the multimedia playing apparatus.

As described above, the multimedia playing apparatus according to the exemplary embodiment may effectively process the identity codes transmitted from the plurality of external apparatuses by using the identification numbers. When this is analyzed on another aspect, the plurality of external apparatuses may be configured through configuring the multimedia playing apparatus according to the exemplary embodiment.

Meanwhile, the multimedia playing apparatus may not be a single apparatus but constituted by a server and a terminal.

FIG. 8 is a block diagram showing a multimedia playing server according to an exemplary embodiment of the present invention.

The multimedia playing server shown in FIG. 8 may include a server control unit 230 extracting and playing multimedia contents corresponding to identity codes transmitted from a plurality of terminals from a playing storage unit and a server communication unit 210 receiving the identity code and an identification number corresponding to the identity code from the terminal and transmitting the multimedia contents played by the server control unit to a terminal which transmits a corresponding identification number.

A plurality of classrooms are provided in a facility such as a school, or the like. Providing the multimedia playing apparatus in each of the classrooms may be irrational in a cost/management aspect.

As a result, the terminal may be installed in the classroom and the service may be provided in a central control room, or the like. In this case, the server may include the server control unit 230 and the server communication unit 210.

The server control unit 230 extracts and plays the multimedia contents corresponding to the identity codes transmitted from the plurality of terminals from the playing storage unit. Of course, for this, a database storing the multimedia contents, or the like should be provided.

The server control unit 230 may receive or not receive the identification information from the terminal, but should be able to at least know a terminal which transmits the identity code. Therefore, discrimination information for at least discriminating the corresponding terminal should be included in the identity code transmitted from the terminal. The identification information may be used as the discrimination information. For example, in the case in which identification numbers 1 to 20 are classroom 1, discrimination numbers 21 to 40 are classroom 2, ..., the multimedia contents corresponding to the identity code transmitted together with identification number 3 are played and thereafter, transmitted to a terminal of classroom 1 including identification number 3. Of course, for this, the multimedia server should know an identification number corresponding to a terminal of each classroom and the information may be written in a table and stored in the database. The server control unit may allow the server communication unit to transmit the identification number to the terminal together with the played multimedia contents. If a plurality of identification numbers and identity codes are transmitted from the same terminal, it is valid. The reason is that if only the multimedia contents played without the identification number are transmitted to the terminal, the terminal is difficult to know which identification number the multimedia contents correspond to.

Contrary to this, the terminal may allow the multimedia server to recognize which terminal data is transmitted from by embedding discrimination information indicating itself at the time of transmitting the identity code.

The server communication unit 210 receives an identity code and an identification number corresponding to the identity code from the terminal and transmits the multimedia contents played by the server control unit to the terminal transmits the corresponding identification number. In some cases, the server communication unit may receive only an identity code in which terminal discrimination information is embedded, but as described above, since a problem occurs when a single terminal transmits identity codes for the plurality of identification numbers, the server communication unit 210 also preferably receives the identification number. Of course, the identification number should correspond to the transmitted identity code.

FIG. 9 is a block diagram showing a terminal according to an exemplary embodiment of the present invention.

The terminal shown in FIG. 9 includes a display unit 350, a terminal control unit 330, a first terminal communication unit 310, and a second terminal communication unit 320.

The display unit 350 is an element that outputs multimedia contents transmitted from a multimedia playing server and the display 210 or the speaker 230 shown in FIG. 7 corresponds to the display unit.

The terminal control unit 330 generates a selection signal in accordance with a user's request. Further, after a display region on the display unit is allocated to an identification number in accordance with the user's request, the multimedia contents are outputted onto the display region.

The first terminal communication unit 310 transmits the selection signal generated by the control unit to an external apparatus and receives the identification number selected by the selection signal and an identity code corresponding to the identification number from the external apparatus. In the case in which the external apparatus includes a USB interface as an external apparatus selecting device, the first terminal communication unit may be a USB port. In the case in which the external apparatus selecting device is configured by an access point AP, the first terminal communication unit may be formed integrally with the access point, that is, the external apparatus selecting device.

The second terminal communication unit 320 transits the identification number and the identity code to the multimedia playing server and transmits the multimedia contents played from the multimedia playing server and transmits them to the control unit.

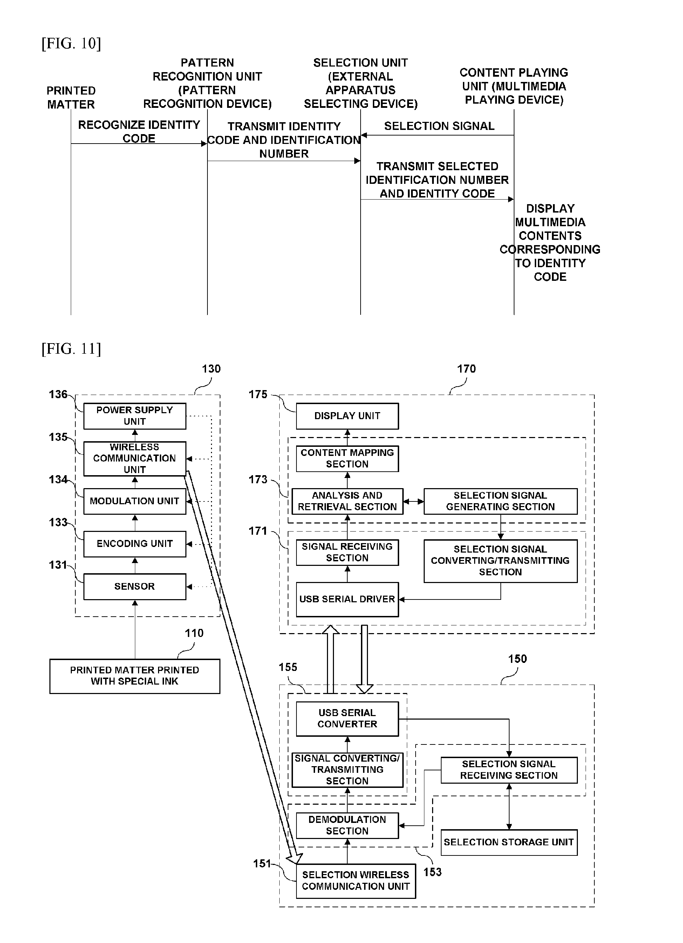

FIG. 10 is a flowchart showing a method for playing multimedia according to an exemplary embodiment of the present invention. FIG. 10 may be described as n operation of the multimedia playing system shown in FIG. 1.

First, a pattern recognition unit recognizes an identity code of special ink printed in a printed matter. The recognized identity code is transmitted to the selection unit together with a previously stored identification number.

In this case, the selection unit may receive the identity code and the identification number from one or more pattern recognition unit.

The selection unit compares the transmitted identity code and the identification number with a selection signal transmitted from a playing unit to transmit only the corresponding identification number and identity code to a content playing unit.

The content playing unit extracts and displays the multimedia contents corresponding to the identity code transmitted from the selection unit.

As described above, even though a plurality of pattern recognition units are provided, the multimedia contents may easily be managed trough the identification number.

FIG. 11 is a block diagram specifically showing the system for playing multimedia according to the exemplary embodiment of the present invention.

The multimedia playing system shown in FIG. 11 includes a printed matter 110, a pattern recognition unit 130, a selection unit 150, and a content playing unit 170.

The printed matter 110 is printed with special ink to serve as a recognition target of the pattern recognition unit.

The pattern recognition unit 130 includes a sensor 131 sensing at least one a material or pattern of special ink printed in the printed matter, an encoding unit 133 converting an output signal, that is, a result sensed by the sensor into an identity code, a modulation unit 134 synthesizing the converted identity code and the identification number of the pattern recognition unit and modulating it into a wireless communication signal, and a wireless communication unit 135 wirelessly transmitting the modulated wireless communication signal, and a power supply unit 136 supplying electrical power to the components.

The selection unit 150 of FIG. 1 is configured by a USB module.

The selection unit 150 includes a selection wireless communication unit 151 receiving the wireless communication signal transmitted from the wireless communication unit of the pattern recognition unit, an identification number selecting unit 153 including a demodulation section demodulating the received wireless communication signal and converting it into the identity code and the identification number and a selection signal receiving section processing only a wireless communication signal having a matched identification number by using the selection signal transmitted from the content playing unit, and a communication unit 155 including a signal converting/transmitting section converting the identity code and the identification number into a signal to be used in a USB and a USB serial converter converting the corresponding signal into a USB serial protocol and transmitting it to the content playing unit.

The selection signal of the selection signal receiving section may be stored in a selection storage unit and may disable an identification number and an identity code which do not match the selection signal to be transmitted toe the communication unit regarding an operation of a demodulation unit.

The content playing unit 170 includes a playing communication unit 171 including a USB serial driver communicating with the communication unit of the selection unit through the USB serial protocol and a signal receiving section receiving the identity code and the identification number transmitted from the selection unit by automatically recognizing the communication unit of the selection unit, a control unit 173 including an analysis/retrieval section retrieving a content list for only a pattern recognition unit applied by using the identification number after extracting/classifying each signal when the received identity code and identification number are not separated from each other, a content mapping section mapping actual multimedia contents to the retrieved list, and a selection signal generating section generating a selection signal for selecting only a desired identification number and using it for a multimedia playing function, and a display unit 175 displaying mapped data to the outside.

In this case, the playing communication unit may further include a section signal converting/transmitting section signal-converting the selection signal in order to transmit the selection signal generated by the selection signal generating section to the selection unit.

While certain embodiments have been described above, it will be understood to those skilled in the art that the embodiments described are by way of example only. Accordingly, the apparatus described herein should not be limited based on the described embodiments. Rather, the devices and methods described herein should only be limited in light of the claims that follow when taken in conjunction with the above description and accompanying drawings.

The present invention can be applied to a system that recognizes a predetermined object in a printed matter and displays it as multimedia contents.

In particular, the present invention is advantageously applied to a system including a plurality of pattern recognition devices recognizing the object.

## Claims

1. A system for playing multimedia, comprising:
a printed matter printed with special ink;
a plurality of pattern recognition units including a sensor recognizing a material of the printed special ink and outputting a corresponding electrical signal, which transmits an identity code depending on the electrical signal corresponding to the recognized material and an identification number stored to identify at least one pattern recognition unit of the plurality of pattern recognition units;
a selection unit receiving the identity code and the identification number and when the identification number corresponds to a selection signal indicating a pattern recognition unit selected by a user among the plurality of pattern recognition units, transmitting the identity code and the identification number to the outside; and
a content playing unit generating and transmitting the selection signal to the selection unit and receiving the identity code and identification number transmitted by the selection unit and extracting and displaying multimedia contents corresponding to the identity code and identification number.

2. The system of claim 1, wherein the pattern recognition unit includes a wireless communication unit, and
the identity code and the identification number are transmitted to the selection unit through the wireless communication unit.

3. The system of claim 1, wherein the selection unit and the content playing unit are integrally formed.

4. The system of claim 1, wherein the selection unit is embedded in a universal serial bus (USB) module mounted on the content playing unit.

5. The system of claim 1, wherein the identity code is acquired by converting the electrical signal corresponding to the material of the printed special ink into a data form.

6. The system of claim 1, wherein the selection unit is an access point (AP).

7. A method for playing multimedia, comprising:
generating an identity code corresponding to an outputted electrical signal by sensing a material of special ink printed in a printed matter in a pattern recognition unit;
transmitting the identity code to a selection unit together with a previously stored identification number in order to identify any one of a plurality of pattern recognition units;
transmitting an identification number and an identity code corresponding to a selection signal transmitted from a content playing unit to the content playing unit by receiving the identity code and the identification number in the selection unit; and
extracting and displaying previously stored multimedia contents corresponding to the identity code transmitted from the selection unit in the content playing unit.

8. A system for playing multimedia, comprising:
a printed matter printed with special ink;
at least one pattern recognition unit including a sensor recognizing a material of the printed special ink and outputting a corresponding electrical signal, which transmits an identity code depending on the electrical signal corresponding to the recognized material to a selection unit; and
a content playing unit receiving the transmitted identity code from the selection unit and extracting displaying multimedia contents corresponding thereto.

9. The system of claim 8, wherein the pattern recognition unit includes a wireless communication unit, and
the identity code is transmitted to the selection unit through the wireless communication unit.

10. The system of claim 8, wherein the selection unit and the content playing unit are integrally formed.

11. The system of claim 8, wherein the selection unit is embedded in a universal serial bus (USB) module mounted on the content playing unit.

12. The system of claim 8, wherein the identity code is acquired by converting the electrical signal corresponding to the material of the printed special ink into a data form.

13. The system of claim 8, wherein the selection unit is an access point (AP).
